(19) Europäisches Patentamt

European Patent Office

Office européen des brevets

(11) EP 0 898 271 A2

(12) **EUROPEAN PATENT APPLICATION**

(43) Date of publication:
24.02.1999 Bulletin 1999/08

(51) Int. Cl.⁶: **G11B 7/013**, G11B 7/00

(21) Application number: 98115557.5

(22) Date of filing: 18.08.1998

(84) Designated Contracting States:
AT BE CH CY DE DK ES FI FR GB GR IE IT LI LU MC NL PT SE
Designated Extension States:
AL LT LV MK RO SI

(30) Priority: 19.08.1997 JP 222863/97

(71) Applicant:
SEGA ENTERPRISES, LTD.
Tokyo 144 (JP)

(72) Inventors:
• Yonezawa, Seiji
Hachioji-shi, Tokyo (JP)
• Horimai, Yumi
Green-Hill Takanawa, Tokyo (JP)

(74) Representative:
Einsel, Martin, Dipl.-Phys.
Patentanwalt,
Jasperallee 1A
38102 Braunschweig (DE)

(54) **Optical record carrier and apparatus for recording and reproduction of optical record carrier**

(57) An optical record carrier for recording information along tracks provided on the carrier. First information as main information and second information relating to control information for the reproduction of the first information are recorded. In addition, third information which is different from both said first and second information is recorded in association with the second information such that when the first information is reproduced based on the second information, the third information is not directly contained in the first information after demodulation.

The third information is carrier specific information provided e.g. by the manufacturer and is easy to detect but difficult to reproduce, thereby providing protection against unlawful copying of the information record carrier.

Fig. 1

EP 0 898 271 A2

## Description

This invention relates to optical information record carriers such as optical discs and optical cards for recording information by means of optical characteristics and, more particularly, to techniques for the prevention of unlawful copying of the information record carriers.

BACKGROUND OF THE INVENTION

A typical example of the information record carriers for the recording of information by means of optical characteristics is the CD-ROM (compact disc read-only memory), which is a type of optical disc. In many of the CD-ROMs the CLV (constant linear velocity) system is adopted, by which data is recorded by means of pits having regular intervals. The CLV system has the advantage that data capacity of the CD-ROM can be higher than in the CAV (constant angular velocity) system, in which the pits are arranged at intervals which are determined depending on their radial locations such that their angles with respect to the center of the CD-ROM are always constant. In the CAV system, information tracks are formed on the surface of the disc spirally or concentrically, and unit recording information is recorded according to a certain modulation system as a record unit partitioned by a synchronization signal, specific marks or signals. The length of such recording unit in the CAV system is the result of dividing the tracks crosswise into equal parts, and therefore the length of an area for the recording of unit record information near the center of the disc differs from that near the disc periphery. In the CLV system, on the other hand, unit record information is recorded in areas having equal lengths regardless of whether they are located near the disc center or periphery. As a result, the length of a complete track circuit varies as the radius varies, so that the unit record information are not arranged in an orderly manner. In both the CLV and CAV systems, a frame is the unit of recording in the CD-ROM.

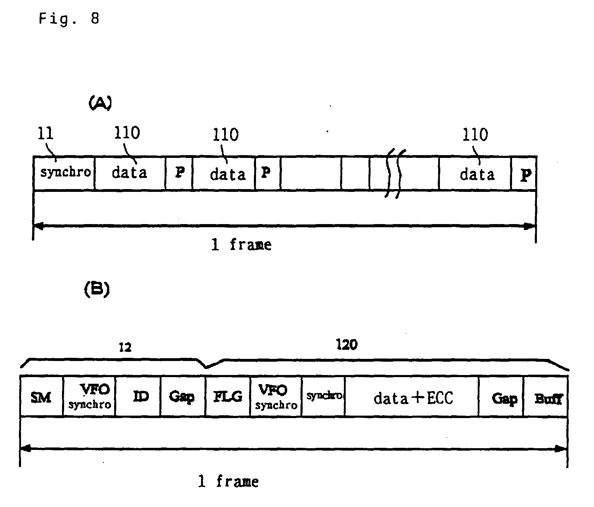

Fig. 8 shows a prior art example of frame structure of a data recording format on the track. Fig. 8(A) is an example of the playback-only optical disc, while Fig. 8(B) is an example of the rewritable optical disc. As shown in the figure, a frame 1 comprises synchronization signals 11, 12 at the beginning and recording-object information 110, 120 including fixed-length data and error-correction codes and the like. Thus, the information recorded on an optical disc is comprised of the object information 110, 120 such as music, picture or other various types of data, and the control information 11, 12 including timing information such as the synchronization signal and clock signal, which are added for an accurate reproduction of the object data, and servo information (not shown) for tracking servo control.

It is also possible to employ the CLV and CAV systems on the same optical disc simultaneously.

For example, Examined JP Utility Model Publication No. 5-44927 discloses an optical disc which is provided with separate record regions for the CLV and CAV systems, and still picture data and the like are recorded in the record region of the CAV system. Further, Examined JP Patent Publication No.5-33470 discloses the provision of separate record regions for the CLV and CAV systems, and, in addition, the location of each record region is separately recorded as address information. The address information is used for switching of rotation control of the disc motor between the CLV-system record region and CAV-system record region.

Today, CD-ROMs are widely used for the recording of digital data such as, for example, various software, text data, and image data. Although these software and text data recorded on CD-ROMs are usually protected under the copyright law, unlawful manufacture and/or sale of bootleg CD-ROMs have been rampant. Particularly in the field of game software and electronic publications such as books and dictionaries, manufacture of bootleg versions is often carried out in an organized manner, thus hindering the normal commercial transactions.

Bootleg CD-ROMs can be produced by first making a replica of the pit configuration recorded on the information recording surface of an original optical disc by plastic material, and then preparing a master for the production of the bootlegs from this replica. This replicating technique, however, is often unable to provide accurate reproductions because of damage which may be done to the pit configuration during the process of removing the protection layer from the disc, which is necessary for exposing the bit configuration prior to replication. In particular, it is extremely difficult to copy an optical disc with a strong protection layer.

Accordingly, bootleggers usually make the master for bootleg optical discs by reading data from a legitimate optical disc of their choice and using the data in the same manner as in the manufacture of legitimate optical discs.

In order to prevent such bootlegging, copyright is indicated on the optical disc surface by printing or marking.

There are other known techniques for detecting unlawful optical discs.

One example is disclosed in Unexamined JP Patent Appl. Discl. No. 4-286768 which takes advantage of the fact that the synchronization signals 11, 12 as mentioned above with reference to Fig. 8 are not usually readable as data. Specifically, a part of the synch signal is previously substituted by another signal before recording, and the presence or absence of the substituted signal is detected during playback so that, if absent, the unauthorized nature of the optical disc can be determined.

Unexamined JP Utility Model Appln. Disclosure No. 2-20884 discloses the formation of a visible pattern on the surface of the signal recording layer of the optical disc. Un-examined JP Patent Appln. Disclosure No. 2-179941 discloses the formation of a visible pattern and the like by modifying the pit configuration on the signal surface of the optical disc.

However, the technique according to JP Unexamined Pat. Appln. Discl. No. 4-286768 still allows the synch signal containing the substitution signal to be reproduced, so that it is not so difficult to produce bootleg optical discs containing the synch signal along with the substitution signal. The techniques according to JP Unexamined Utility Model Appln. Discl. No. 2-20884 and Unexamined Pat. Appln. Discl. No. 2-179941 require the step of generating characters or figures, in addition to the usual step of producing the master of optical discs.

Accordingly, there is a need for information record carriers whose master can be produced by the conventional production steps and from which it is extremely difficult to transplant the pit configuration to the bootleg information record carriers. There is also a need for a playback apparatus which can reject information record carriers manufactured by copying such authentic information carriers as mentioned above.

It is an object of the invention to provide an optical disc with carrier-specific information which is easy to detect but difficult to reproduce.

It is another object of the invention to provide a simple and reliable means of detecting said carrier-specific information.

It is still another object of the invention to provide an optical disc reproduction apparatus with the above-mentioned function.

It is yet another object of the invention to provide an optical disc recording apparatus equipped with the above-mentioned function.

SUMMARY OF THE INVENTION

The invention proposes an optical record carrier on which are recorded: first information which is the intended, objective information such as music, picture or other various data to be recorded on the optical record carrier; second information relating to control information such as a synch signal, clock signal and tracking information necessary for the reproduction of said first information; and third information to be provided as the carrier-specific information by e.g. the manufacturer of the carrier which is related to said second information.

The invention further proposes an optical record carrier recording apparatus comprising a means of recording the third information, which is different from the first and second information, on the optical record carrier in association with the second information.

The invention further proposes an optical record carrier reproduction apparatus comprising means of detecting the third information on the optical record carrier.

BRIEF DESCRIPTION OF THE DRAWINGS

The invention will now be explained below in greater detail by the following description of its preferred embodiments while referring to the attached drawings in which:

Fig. 1 is a schematic block diagram for the explanation of the principle of recording and reproduction of the optical disc according to the invention;
Fig. 2 illustrates the synch signal and the detection method according to the invention;
Fig. 3 shows a different implementation of the synch signal of the invention;
Fig. 4 illustrate the process of recording by clock frequency modulation of the clock according to the invention;
Fig. 5 shows charts for the explanation of the operation of Fig. 4;
Fig. 6 illustrates the process of reproduction according to the invention;
Fig. 7 is a block diagram of a different implementation of the clock frequency-modulation; and
Fig. 8 is for the explanation of the prior art.

DETAILED DESCRIPTION

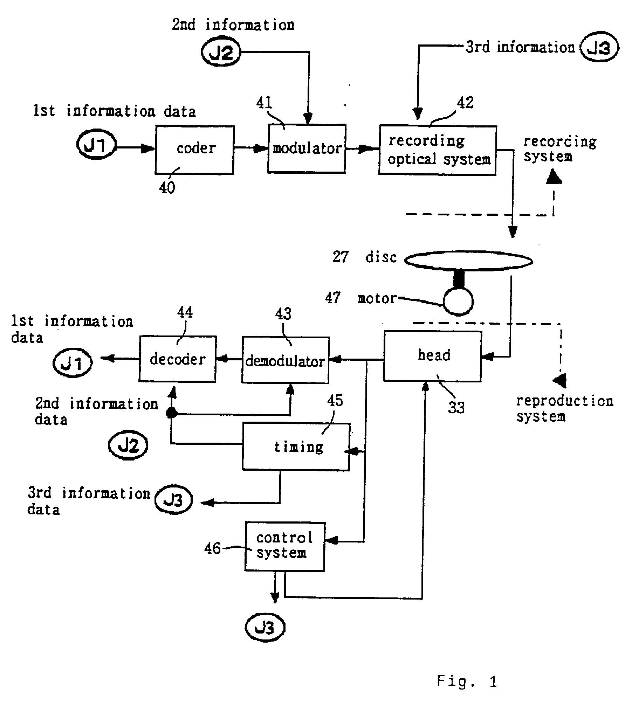

Fig. 1 is a block diagram illustrating the principle of recording and reproducing of an optical disc according to a first embodiment of the invention. The upper half of Fig. 1 shows a recording system for the recording of a synch signal pattern or the second information, data information or the first information, and the third information for controlling the second information. The lower half of Fig. 1 shows a disc data reproduction system. In the following, the recording system will be first explained.

Data (J1) or the first information is processed in a coder 40 by error correcting code, interleaving or scrambling, and converted into block information by being added with the synch signal (Sync) or the second information (J2) in a modulator 41. The output of the modulator is supplied to a recording optical system 42 and thereby recorded on the disc. During this recording procedure, the third information (J3), which concerns the subject matter of the invention, is recorded while being associated with, i.e. modulating, for example, the second information such as the synch information or tracking information. Accordingly, the third information is applied to either or both of the modulator 41 and the recording optical system 42, depending on the object of the modulation or modulation method.

In the reproduction system, on the other hand, a head 33 picks up a reproduction signal from the disc, and a timing signal is reproduced in a timing processing circuit 45, while detection data is demodulated in a demodulator 43 using the thus-reproduced timing signal. A further demodulator 44 performs error correction and the like thereby to output he first information data (J1). A control system 46 ensures a correct reproduction operation based on servo information on the disc. The method and point of detection of the third information (J3) differ depending on where it is modulation-recorded in the information recorded on the disc in accordance with the recording methods as mentioned above.

For example, where the third information has been recorded by modulating the synch signal or timing signal, the third information (J3) is detected in the timing processing circuit 45, while where it has been recorded by modulating the servo information by e.g. wobbling the pits, the third information (J3) is detected in the control system 46.

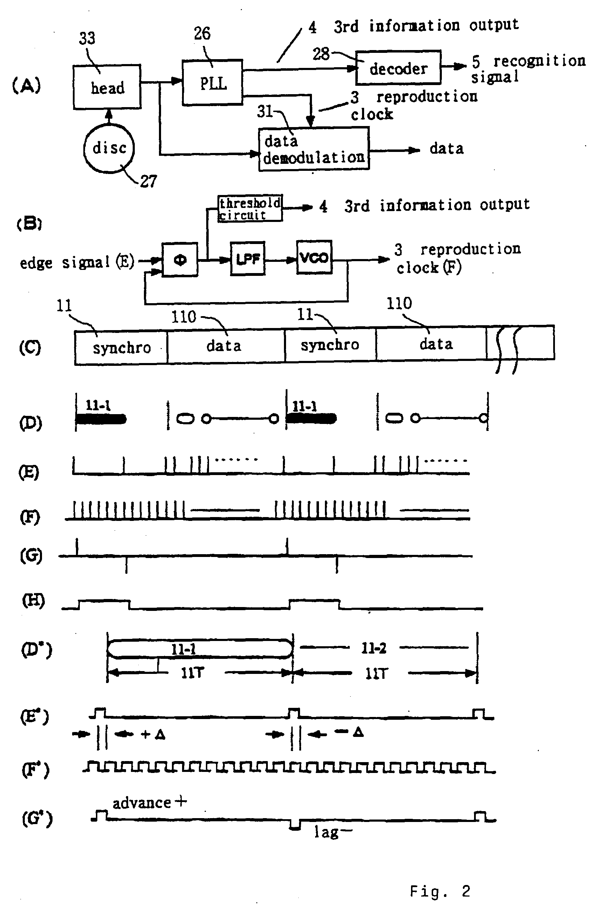

Referring to Fig. 2, reproduction of the third information from the optical disc when the synch signal is used as the second information will be explained. In Fig. 2, (A) is a block diagram of the reproduction system, (B) is a block diagram illustrating the principle of operation of a PLL circuit in the reproduction apparatus, (C) shows the signal format on the track containing the synch signal modulated by the third information, (D) shows the recording pits of the synch signal and data signal, (E) is a pit-edge detection signal, (F) is a reproduction clock signal, (G) is a phase detection output, and (H) is a threshold detection output. In (B), designated by $\phi$ is a phase comparator, by LPF a low-pass filter, and by VCO a voltage controlled oscillator.

On the tracks of the disc according to the present embodiment is recorded information in the same format as in the case of the reproduction-only disc of Fig. 8, shown in Fig. 2(C). The information therefore consists of the synch signal 11 followed by the data 110. More specifically, these data are recorded in the form of information pits as shown in Fig. 2(D). In this recording mode, the information is associated with the pits themselves and the interval between the individual pits. Thus, the pit-edge detection signal shown in Fig. 2(E) is the basis. In the present embodiment, the synch signal 11 is comprised of a pit 11-1 and an interval 11-2, with the pit 11-1 being slightly longer than usual. This will be explained by referring to Fig. 2(D), (E) and (F), and their enlarged figures (D*), (E*), (F*) and (G*).

The pit 11-1 in the prior art example of Fig. 2(D) has a length of n times T or nT, where T is the clock period. In the present embodiment of the invention, however, this length is elongated by $\Delta$ both forwardly and backwardly such that nT+2$\Delta$. As a result, the pit interval 11-2 is shortened by $\Delta$. The value of $\Delta$ is preferably selected to be T/2. Consequently, the edge detection signal (E*) is displaced by $\pm\Delta$ with respect to the clock signal (F*). The same result would be obtained by, conversely, shortening the pit interval 11-1 by $\Delta$ and

elongating the pit interval 11-2 by $\Delta$. The PLL circuit 26 receives the edge signal (E) as the input and outputs a reproduction clock signal (F) which has a predetermined relationship with the edge signal. The PLL circuit 26 has the function of generating a reproduction clock which follows changes in the linear velocity due to rotation speed fluctuation or eccentricity of the disc in the reproduction apparatus (see Fig. 2(B)).

In the input portion of the PLL circuit 26, a phase comparator compares the phase of the input or edge signal (E) with that of the reproduction clock (F) or output 3. The phase difference is applied to the voltage controlled oscillator VCO via the low-pass filter LPF. In other words, the phase difference is averaged by the LPF before controlling the VCO. The averaging allows the fluctuation of the linear velocity to be followed. The phase comparator therefore outputs the instantaneous phase for each and every pit, and the VCO is controlled by a quantity which is obtained by the averaging of the phase differences with respect to time. Accordingly, in the synch signal portion in the present embodiment, the phase comparator detects a leading output of $\Delta$ at the front edge portion of the synch pit 11-1 and a lagging output of $\Delta$ from the trailing edge of the synch pit 11-1. However, these are instantaneous phase differences of $\pm\Delta$ and are therefore canceled by the averaging provided by the LPF and hardly affect the output (F) of the PLL circuit 26.

In the present embodiment, a threshold circuit is provided as shown in Fig. 2 (B) which evaluates the output of the phase comparator, so that the presence of $\pm\Delta$ as mentioned above can be detected above a certain phase difference. It is however possible that a phase difference output in excess of the predetermined level is present at the output of the comparator due to noises and the like. Such possibility can be precluded by specifying (although not particularly shown in the drawing) the position of the synch signal portion and, taking advantage of the nature of the phase difference being generated for each synch signal, by adopting means of adding up the leading edge portions and trailing edge portions, respectively, so that the detection can be done highly accurately.

A decoder 28 shown in Fig. 2(A) performs such processing, and based on a signal thus processed, an identification signal 5 is emitted which indicates whether the disc is authentic or not. The optical record carrier reproduction apparatus can therefore reject, for example, the unauthorized copy carrier based on the identification signal 5. Thus, the third information can be detected without affecting the first information. The symmetric modulation of the synch signal pattern does not affect the data or timing signal and the like, so that a very high degree of freedom in design can be enjoyed.

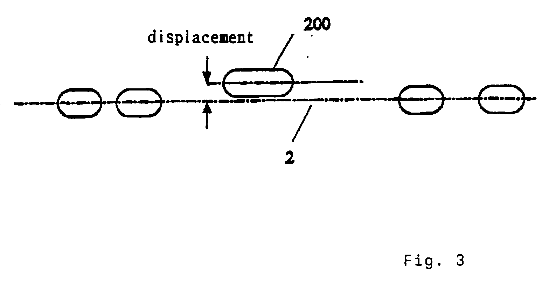

Fig. 3 shows another method of modulating the pit position and length or the synch signal or the second information in the above embodiment. In Fig. 3, a synch signal pit 200 of the second information modulated by the third information is recorded while being displaced from a track center line 2 along the disc radius. As a result, such displaced synch signal will seemingly have the edge of the pit shifted in comparison with the case of no modulation. This method is called the wobbling method and can be realized by providing a modulating means in the optical system of the recording apparatus.

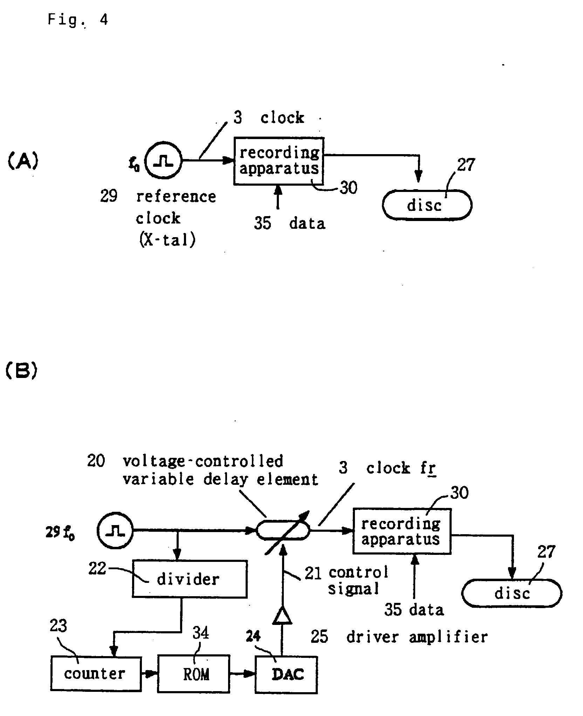

Referring to Figs. 4, 5 and 6, a recording method whereby the recording clock frequency fr is frequency-modulated in an another embodiment of the invention will be described.

In Fig. 4, (A) shows the block diagram of the conventional optical disc recording system of Fig. 8. A reference clock 29 is applied to a recording apparatus 30, whereby recording data 35 is coded and modulated into a recording signal which forms a recording pattern on the disc 27. In the figure, fo is a stable reference clock with a predetermined frequency which is used as the basis of timing in the entire recording system. A clock 3 of the signal recorded on the disc 27 therefore has a constant frequency.

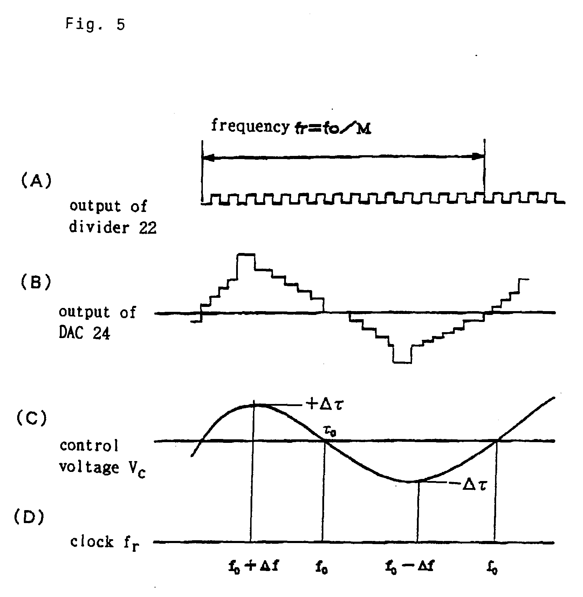

Fig. 4 (B) shows the block diagram of the recording system in the embodiment of the invention. Compared with the conventional apparatus, this embodiment is characterized by the fact that the clock fr3 applied to the recording apparatus is not constant but varied within a small range by a control signal 21. Thus, the fr is frequency-modulated by the control signal 21 or control voltage Vc. Means for this frequency modulation is comprised of a divider 22, counter 23, ROM 34, DAC 24, driver amplifier 25 and voltage controlled variable delay element 20 in Fig. 4(B). The frequency modulation by this means will be explained by referring to Fig. 5.

Referring to Fig. 5 for the explanation of the embodiment of the invention, the reference clock fo is divided by the divider 22 whose output is a clock with a frequency fo/M (where M is mth power of 2). This output is applied to a p-stage binary counter 23 whereby the contents of the counter 23 takes a number P (=pth power of 2) of p-bit states from 00..... 0 to 11.....1. Thus, there is obtained a data sequence with P-bit periods. These p-bits are fed to the address of the ROM 34. The ROM 34 then outputs the P number of patterns (whose bit length can be selected as desired depending on the configuration of the ROM) corresponding to the p-bit address.

For example, assuming now that p=4, there would be P=16 patterns. If these patterns are a single period of a simple sine wave, the DAC output would be sinusoidal data as shown in Fig. 5(B). This DAC output varies every fo/M clock to result in a sinusoidal output with a period P. This output is put through the driver amplifier with a low-pass filter characteristic and used as the control signal Vc(t) for the variable delay element. The variable delay element is an element whose delay time varies according to the control input, and it can be realized by simply utilizing the delay time characteristic of a digital gate element caused by the supply voltage. Accordingly, the delay time $\tau D$ varies with period P as a function of Vc(t). The $\tau D(t)$ fluctuates e.g. by $\pm\tau\Delta$ with respect to $\tau 0$ at the center, as shown in the figure.

The recording clock fr3 of Fig. 4 (B) is a frequency-modulated clock with modulation period P bit time such that $fr=fo\pm\Delta f$ which is obtained by passing the reference clock fo through the variable delay element 20. The frequency modulation by the variable delay element will be explained in the following.

The fr is a signal delayed by $\tau 0$ of fo. Now introducing hypothetically the propagation speed $\upsilon$ of the signal for explanation purposes, fr is at a point away from fo by the distance $d=\upsilon\tau D$. When d is constant, i.e. when the point fr is stationary, fr simply lags behind fo by $\tau D$. However, when fr is moving in the direction of fo at a speed v, frequency f increases on the same principle as the Doppler effect. The frequency decreases when the direction is opposite. Since the change of $\tau D$ with respect to time can be understood as an equivalent phenomenon to the movement of fr, fr is fo frequency-modulated by $\tau D(t)$.

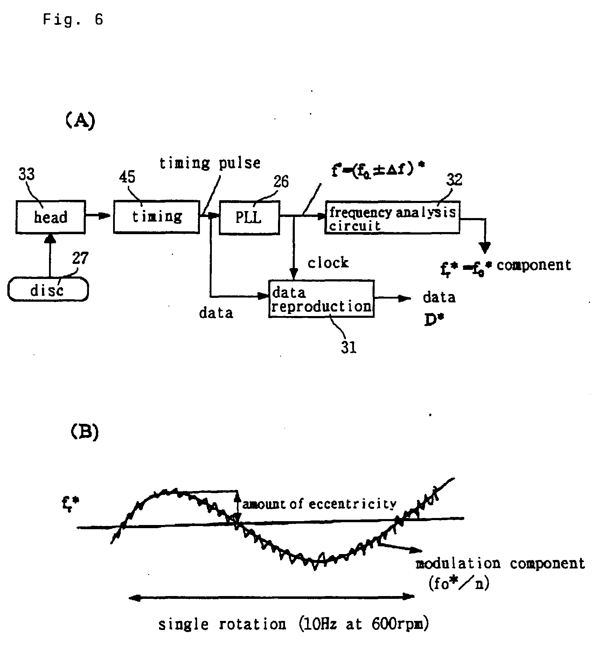

Thus, in accordance with the recording apparatus of the embodiment of Fig. 4(B), the data is recorded on the disc while being frequency-modulated by the period of the P-bit time, i.e., the frequency fo/n, within the frequency variation range of $fr=fo\pm\Delta f$, wherein $n=M\cdot P=2^m\cdot 2^P=2^{m+p}=2^N$. For example, when N=10, $n=2^N=2^{10}=1024$, and if fo is in the order of several megahertz, fo/n is in the order of several kilohertz. That is, $\Delta f$ is an extremely small value, and the recording data contains the above-mentioned modulation component in the order of $\Delta f/fo\approx0.001(0.1\%)$. But this influence during reproduction of recorded data is no more than that due to timing jitter caused by various factors during reproduction or a change in the linear velocity due to disc eccentricity, and therefore does not pose any problem in data reproduction. In the following, the reproduction procedure of the disc recorded in the above-mentioned method will be explained by referring to the embodiment of Fig. 6.

Referring to Fig. 6(A) and (B), the recorded signal on the disc 27 is read by the head 33 and from which the timing component and the data component are extracted in a timing processing circuit 45. The timing component is used in the PLL circuit 26 for the generation of a reproduction clock which in turn is used in a data reproduction circuit 31 for demodulating the data, whereby data D* is extracted. Even if the recording clock has been frequency-modulated during the disc recording, as mentioned above, the frequency modulation is associated with reference clock fo, e.g. 1/M or 1/n of fo, so that the relationship between the clock and recorded data is not affected in principle by the linear velocity of the recorded signal, i.e., it is not affected by the eccentricity of the disc nor by the rotation speed.

The fluctuation component f* of the reproduction clock can be detected by detecting the 1/n component of the clock. This is suitable for the method whereby the frequency analysis is realized in the frequency analysis circuit 32 by a digital signal processing means. By detecting the fo/n component by this method, the presence or absence of the modulation at the time of recording, i.e., the object of the invention to evaluate the carriers, can be achieved.

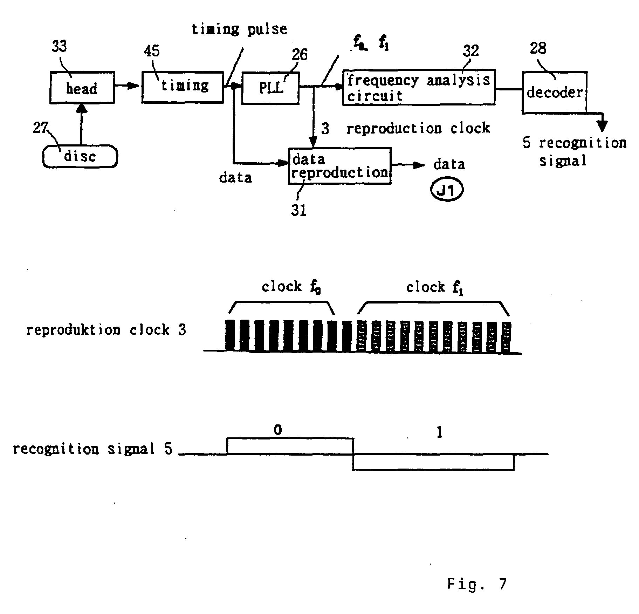

Referring to Fig. 7, another embodiment of the invention will be explained. The recorded signal on the disc 27 is read by the head 33 and from which the timing and data components are extracted in the timing processing circuit 45. The timing component is used in the PLL circuit 26 for the generation of a continuous reproduction clock which in turn is used for the demodulation of the data in the data reproduction circuit 31, whereby data (J1) is obtained. The clock has a tolerance of fluctuation such that the recording frequency may be changed from f0 to f1 for the recording of disc data if the frequency is within the tolerance. Accordingly, in the present embodiment, the data consists of disc data recorded with the recording frequency f0 and disc data recorded with the recording frequency f1 which are placed alternately, whereby the third information is incorporated. The third information thus incorporated can be detected by the method explained below.

The period of alternating the disc data recorded with the recording frequency f0 and the disc data recorded with the recording frequency f1 is preferably set above the frequency to which the spindle motor does not respond and below the frequency that the PLL circuit 26 can follow. By this, the alternating period is not absorbed by the spindle motor and followed only by the PLL circuit 26, so that the output clock frequency varies between f0 and f1.

As the disc which was recorded in the manner as explained above is reproduced, the reproduction clock is f0 when reproducing the disc data recorded with the recording frequency f0, while the clock is f1 when reproducing the disc data recorded with the recording frequency f1. These reproduction clock signals are input to the frequency analysis circuit 32. This circuit contains two resonance circuits, which are not shown, and is configured such that it outputs 0 when a signal with the frequency f0 is input and it outputs 1 when a signal with the frequency f1 is input. In other words, it outputs 0 and 1 alternately as detection outputs as the disc data alternate. These detection output data are decoded whereby the authenticity of the disc can be recognized and some recognition signal 5 is output.

In the reproduction of a disc which was produced in accordance with the concept of the invention, the phase and frequency of the reproduction clock is automatically adjusted in such a manner as to be synchronized with the clock extracted in the PLL circuit from the data. Accordingly, the disc can be reproduced in the same way as in the case of the ordinary discs, and hardly any margin in the data demodulation is lost. Further, the disc data recorded with the recording frequency f0 and the disc data recorded with the recording frequency f1 may have their frequencies alternated gradually. As a result, hardly any error arises in the PLL circuit, and therefore there is no possibility that the system stability is disturbed.

Furthermore, even if a phase error arose locally in the PLL circuit due to the influence of dust, the frequency analysis circuit 32 has a high Q of resonance and therefore detect only f0 or f1, so that there is little possibility of erroneous detection. In addition, the manner of repetition of f0 and f1 can be codified, which means that encryption can be utilized.

Accordingly, even if the disc according to the invention was reproduced and illegally copied by having its output information translated onto a different carrier such as, for example, a magnetic disc, the third information would not be recorded on the unauthorized disc, so that its authenticity can be checked by means of the third information detection means. Further, by placing the spatially modulated portion at a plurality of regions on the disc in such a manner as not to be known by a third party, the reproduction of the third information can be made difficult.

Thus, in accordance with the invention, the carrier-specific information can be recorded and reproduced without affecting the reproduction of the first information at all, i.e., without the reproduced first information containing the third information, whereby authenticity of the disc with respect to certain information can be determined.

According to the third information recording system of the invention, the third information can be easily detected but is difficult to copy. The system therefore can be used for the purpose of guaranteeing the authenticity of the carrier with respect to specific information. The concept of the invention can be applied regardless of the system of recording and detection, modulation, or control of the optical disc, and can provide a highly practical solution against bootlegging.

While there have been shown and described what are at present considered to be the preferred embodiments of the present invention, it will be obvious to those skilled in the art that various changes and modifications may be made therein without departing from the scope of the invention as defined by the appended claims.

The following list of reference numerals is to be considered as part of the description and shall give easy access to the accompanying drawings:

## List of Reference Numerals

| | |
|---|---|
| 3 | clock or reproduction clock |
| 4 | 3$^{rd}$ information output |
| 5 | recognition signal |
| 11 | synch or synchro signal |

| | |
|---|---|
| 11-1 | pit |
| 11-2 | interval |
| 20 | voltage-controlled variable delay element |
| 21 | control signal |
| 22 | divider |
| 23 | counter |
| 24 | DAC |
| 25 | driver amplifier |
| 26 | PLL cicuit |
| 27 | disc |
| 28 | decoder |
| 29 | reference clock |
| 30 | recording apparatus |
| 31 | data reproduction |
| 32 | frequency analysis circuit |
| 33 | head |
| 34 | ROM |
| 35 | data |
| 40 | coder |
| 41 | modulator |
| 42 | recording optical system |
| 43 | demodulator |
| 44 | decoder |
| 45 | timing |
| 46 | control system |
| 47 | motor |
| 110 | data |
| 200 | synch signal pit |
| J1 | 1$^{st}$ information data |
| J2 | 2$^{nd}$ information data |
| J3 | 3$^{rd}$ information data |
| LPF | low pass filter |
| VCO | voltage controlled oscillator |

**Claims**

1. An optical record carrier for recording information along tracks provided on the optical disc carrier, wherein first information as main information and second information relating to control information for the reproduction of said first information are recorded, characterized in that third information which is different from said first and second information is recorded in association with said second information such that when the first information is reproduced based on the second information, said third information is not directly contained in demodulated first information.

2. An optical record carrier according to claim 1, wherein the third information is recorded while modulating the second information.

3. An optical record carrier according to claim 2, wherein the optical record carrier surface is divided into a plurality of regions each having predetermined measurements, wherein the mode of modulation is the same within each of the regions but different from one neighboring region to another.

4. An optical record carrier according to claim 2, wherein the second information to be modulated by the third information comprises tracking information.

5. An optical record carrier according to claim 2, wherein the second information to be modulated by the third information comprises timing information such as a synch signal or clock signal and the like for the reproduction of the first information.

6. An optical record carrier according to claim 4, wherein the modulation of the tracking information comprises a wobbling modulation whereby the record information pits are displaced laterally with respect to the center of track according to a predetermined rule.

7. An optical record carrier recording apparatus comprising means for recording, in addition to first information as main information and second information relating to control information for the reproduction of said first information, third information which is different from the first and second information in association with the second information such that when the first information is reproduced based on the second information, the third information is not directly contained in demodulated first information.

8. An optical record carrier reproduction apparatus for the reproduction of an optical record carrier in which first information as main information and second information relating to control information for the reproduction of said first information are recorded along tracks provided on the optical record carrier, in which further third information which is different from said first and second information is recorded in association with the second information such that when the first information is reproduced based on the second information, the third information is not directly contained in demodulated first information, the apparatus comprising detection means for detecting said third information.

Fig. 1

(A)

33  head

26  PLL

4  3rd information output

28  decoder

5 recognition signal

3 reproduction clock

31

data demodulation → data

disc

27

(B)

threshold circuit → 4  3rd information output

edge signal (E) → Φ → LPF → VCO → 3  reproduction clock (F)

11

110

11

110

(C) | synchro | data | synchro | data | |

(D)  11-1   11-1

(E)

(F)

(G)

(H)

(D')  11-1  11-2
11T  11T

(E')  → || ← + Δ  → || ← − Δ

(F')

(G')  advance +  lag −

Fig. 2

9

Fig. 3

Fig. 4

(A)

3   clock

29   reference
clock
(X-tal)

recording
apparatus
30

35   data

disc
27

(B)

20   voltage-controlled
variable delay element

3   clock fr

30

29 f₀

22   divider

21 control
signal

recording
apparatus

disc
27

35 data

23

34

24

25   driver amplifier

counter   ROM   DAC

Fig. 5

frequency $f_r = f_0 / M$

(A)

output of
divider 22

(B)

output of
DAC 24

(C)

control
voltage $V_c$

$+\Delta\tau$

$\tau_0$

$-\Delta\tau$

(D)

clock $f_r$

$f_0 + \Delta f$    $f_0$    $f_0 - \Delta f$    $f_0$

Fig. 6

(A)

(B)

single rotation (10Hz at 600rpm)

timing pulse

$f_0$ $f_1$

| 33 | 45 | 26 | | 32 | 28 |
|---|---|---|---|---|---|

head → timing → PLL → frequency analysis circuit → decoder

27

disc

3 reproduction clock

data

5 recognition signal

data reproduction → data (J1)

31

clock $f_0$        clock $f_1$

reproduktion clock 3

recognition signal 5

0        1

Fig. 7

Fig. 8

(A)

1 frame

(B)

1 frame